# EUROPÄISCHE PATENTANMELDUNG

(11) **EP 3 279 172 A1**
(43) Veröffentlichungstag der Anmeldung: **07.02.2018**
(21) Anmeldenummer: 17182230.7
(22) Anmeldetag: 07.03.2013
(51) Int. Cl.: C04B 28/04, C04B 28/06, C04B 28/16, C04B 111/00, C04B 111/22

(54) **ZEMENTHALTIGE TROCKENZUSAMMENSETZUNG UND VERFAHREN ZUR ERHÖHUNG DER LAGERSTABILITÄT EINER ZEMENTHALTIGEN TROCKENZUSAMMENSETZUNG**

(62) Teilanmeldung aus: 13158232.2
(71) Anmelder: STO SE & Co. KGaA, 79780 Stühlingen (DE)
(72) Erfinder: Restle, Christian, 78250 Tengen-Talheim (DE); Holzer, Michael, 78316 Radolfzell (DE)
(74) Vertreter: Gottschalk, Matthias

(57) **Zusammenfassung**

Die Erfindung betrifft eine zementhaltige Trockenzusammensetzung zur Ausbildung einer Beschichtung, insbesondere einer Putzschicht oder einer Bodenbeschichtung, auf einer Gebäudewand oder -decke, wobei die Zusammensetzung wenigstens ein Additiv umfasst. Erfindungsgemäß sind ferner Portlandzement und Tonerdezement als Bindemittel sowie wenigstens ein Sulfat oder Sulfatträger enthalten. Der pH-Wert der Zusammensetzung beträgt < 12, vorzugsweise < 11, weiterhin vorzugsweise < 10.

Ferner betrifft die Erfindung ein Verfahren zur Erhöhung der Lagerstabilität einer zementhaltigen Trockenzusammensetzung zur Ausbildung einer Beschichtung, insbesondere einer Putzschicht oder einer Bodenbeschichtung, auf einer Gebäudewand oder -decke, wobei die Zusammensetzung wenigstens ein Additiv umfasst.

## Beschreibung

Die Erfindung betrifft eine zementhaltige Trockenzusammensetzung zur Ausbildung einer Beschichtung, insbesondere einer Putzschicht oder einer Bodenbeschichtung, auf einer Gebäudewand oder -decke mit den Merkmalen des Oberbegriffs des Anspruchs 1. Die zementhaltige Trockenzusammensetzung umfasst wenigstens ein Additiv. Des Weiteren betrifft die Erfindung ein Verfahren zur Erhöhung der Lagerstabilität einer derartigen Zusammensetzung.

### Stand der Technik

Zusammensetzungen der vorstehend genannten Art, insbesondere zementäre Trockenmörtelzusammensetzungen, enthalten in der Regel ein Redispersionspulver als weiteres Bindemittel. Durch die Zugabe von Anmachwasser zur Trockenenzusammensetzung entsteht aus dem Redispersionspulver eine Polymerdispersion. Bei besonderen klimatischen Bedingungen, wie beispielsweise bei hoher Luftfeuchtigkeit, können die im Redispersionspulver enthaltenen Estergruppen jedoch verseifen, so dass sich die trockene, das Redispersionspulver enthaltene Zusammensetzung als wenig lagerstabil erweist. Es ist daher üblich, Redispersionspulver durch Schutzkolloide zu schützen, um die Lagerstabilität einer solchen Zusammensetzung zu erhöhen. Schutzkolloide sollen ferner eine verfrühte Verfilmung sowie eine Agglomeration der Polymerteilchen des Redispersionspulvers verhindern. Denn bei einer verfrühten Verfilmung und/oder Agglomeration der Polymerteilchen des Redispersionspulvers kann dieses seine Funktion als Bindemittel - wenn überhaupt - nur noch eingeschränkt erfüllen.

Als Schutzkolloide werden üblicherweise Polyvinylalkohole, Polyvinylacetate, Polyvinylpyrrolidone und/oder Polysaccharide eingesetzt. Diese Stoffe sind wasserlöslich, da sie durch Anmachwasser von den Pulverteilchen des Redispersionspulvers abgelöst werden müssen, um die dann erwünschte Filmbildung bzw. Agglomeration zu ermöglichen. Die Wasserlöslichkeit der Schutzkolloide führt jedoch dazu, dass deren Stabilität, insbesondere in zementären Trockenmörtelzusammensetzungen, die in Ländern mit hoher Luftfeuchtigkeit zur Anwendung gelangen, ungenügend sein kann. Mit Versagen der Schutzkolloide ist ferner ein ausreichender Schutz des Redispersionspulvers nicht mehr gewährleistet.

In zementären oder zementhaltigen Trockenzusammensetzungen können darüber hinaus weitere Additive zur Beeinflussung der Eigenschaften der Zusammensetzung und/oder einer hieraus hergestellten Beschichtung enthalten sein, die ebenfalls "empfindlich" sind und somit zur Verringerung der Lagerstabilität der Zusammensetzung beitragen.

Aufgabe der vorliegenden Erfindung ist es, eine zementhaltige Trockenzusammensetzung zur Ausbildung einer Beschichtung, insbesondere einer Putzschicht oder einer Bodenbeschichtung, mit wenigstens einem Additiv anzugeben, die selbst bei hoher Luftfeuchtigkeit stabil und damit möglichst lange lagerbar ist.

Zur Lösung der Aufgabe wird eine zementhaltige Trockenzusammensetzung mit den Merkmalen des Anspruchs 1 vorgeschlagen. Darüber hinaus wird ein Verfahren zur Erhöhung der Lagerstabilität einer solchen Zusammensetzung mit den Merkmalen des Anspruchs 9 angegeben. Vorteilhafte Weiterbildungen der Erfindung sind den jeweiligen Unteransprüchen zu entnehmen.

### Offenbarung der Erfindung

Die zur Ausbildung einer Beschichtung, insbesondere einer Putzschicht oder einer Bodenbeschichtung, auf einer Gebäudewand oder -decke vorgeschlagene zementhaltige Trockenzusammensetzung mit wenigstens einem Additiv umfasst erfindungsgemäß Portlandzement und Tonerdezement als Bindemittel sowie wenigstens ein Sulfat oder Sulfatträger. Des Weiteren erfindungsgemäß beträgt der pH-Wert der Zusammensetzung < 12, vorzugsweise < 11, weiterhin vorzugsweise < 10.

Zur Messung des pH-Wertes wird die Trockenzusammensetzung mit Wasser zu einer pastösen Masse verarbeitet, die der verarbeitungsfertigen Masse zur Ausbildung der Putzschicht oder der Bodenbeschichtung entspricht. Durch das "Anfeuchten" lässt sich der pH-Wert der Trockenzusammensetzung in einfacher Weise bestimmen. Zur Bestimmung des pH-Wertes genügt es, einen geringen Teil, beispielsweise einen Becher voll, der Trockenzusammensetzung mit Wasser anzumachen, da das Ergebnis in gleicher Weise auf die nicht angemachte Trockenzusammensetzung zutrifft.

Der erfindungsgemäß geforderte pH-Wert < 12, vorzugsweise < 11, weiterhin vorzugsweise < 10 wirkt sich günstig auf die Lagerstabilität der Trockenzusammensetzung aus (dies betrifft selbsterklärend nur den nicht angemachten Teil der Trockenzusammensetzung, während der zur Messung des pH-Wertes angemachte Teil beginnt auszuhärten). Denn ein hoher pH-Wert, insbesondere ein pH-Wert über 12, wie er herkömmlichen zementhaltigen Zusammensetzungen eigen ist, kann dazu führen, dass die in der Zusammensetzung enthaltenen Additive zerfallen und wirkungslos werden.

Der gegenüber herkömmlichen, zementhaltigen Trockenzusammensetzungen reduzierte pH-Wert der erfindungsgemäßen Trockenzusammensetzung ist auf die vorgeschlagene Bindemittelmischung zurückzuführen, welche Portlandzement und Tonerdezement umfasst. Diese Bindemittel weisen nur eine geringe Basizität auf und tragen somit zur Reduzierung des pH-Wertes der Zusammensetzung bei. Gleiches gilt für das Sulfat bzw. den Sulfatträger als weitere erfindungswesentliche Komponente der Zusammensetzung.

Der reduzierte pH-Wert hat zur Folge, dass eine Verseifung der in Redispersionspulvern enthaltenen Estergruppen verhindert oder zumindest gehemmt wird, so dass sich die zementhaltige Trockenzusammensetzung auch bei besonderen klimatischen Bedingungen, wie beispielsweise bei hoher Luftfeuchtigkeit, als stabil erweist. Soweit Schutzkolloide zum Schutz des Redispersionspulvers Einsatz finden, wird durch den verringerten pH-Wert auch deren Stabilität erhöht.

Darüber hinaus wirkt sich ein reduzierter pH-Wert auch günstig auf andere Additive aus, insbesondere solche, die sich in einem stark alkalischen Milieu leicht zersetzen und/oder deaktiviert werden. Dadurch kann nicht nur die Lagerstabilität der zementhaltigen Trockenzusammensetzung weiter erhöht werden, sondern es bleibt ferner die Wirksamkeit der Additive über die Zeit gewährleistet. Zudem haben Versuche mit Beschichtungen aus erfindungsgemäßen Zusammensetzungen gezeigt, dass der pH-Wert nach wenigen Tagen in der Regel noch weiter absinkt, so dass besonders gute Bedingungen für alkali-empfindliche Additive geschaffen werden.

Gemäß einer bevorzugten Ausführungsform der Erfindung sind bezogen auf das Trockengesamtgewicht der Ausgangsstoffe 1-30 Gew.-% Portlandzement, 1-35 Gew.-% Tonerdezement und 0,5-15 Gew.-% wenigstens eines Sulfats oder Sulfatträgers (gerechnet als SO₄²⁻) enthalten. Entsprechende Mischungsverhältnisse gewährleisten einen pH-Wert, der deutlich unterhalb des Wertes herkömmlicher zementhaltiger Trockenzusammensetzungen zur Ausbildung von Putzschichten oder Bodenbeschichtungen liegt und somit zu den vorstehend genannten Vorteilen führt. Das Verhältnis der drei Komponenten Tonerdezement, Portlandzement und Sulfat bzw. Sulfatträger zueinander beträgt vorzugsweise 10:2:1 bis 10:50:20.

Das enthaltene Additiv ist vorzugsweise ein Redispersionspulver, ein Redispergiermittel, ein Hydrophobierungsmittel, ein Flammschutzmittel, ein Wasserrückhaltemittel, ein Verzögerer, ein Beschleuniger, ein Netzmittel, ein Luftporenbildner, ein Fließmittel, ein Entschäumer, ein Entstaubungsmittel, ein Biozid, ein Pigment, Fasern und/oder ein rheologisches Additiv. Das Additiv kann allein oder in Kombination mit wenigstens einem weiteren Additiv in der Trockenzusammensetzung enthalten sein. Durch Additive lassen sich insbesondere die Verarbeitungseigenschaften der Zusammensetzung beeinflussen. Ferner können Additive einer aus der Zusammensetzung hergestellten Beschichtung besondere Eigenschaften verleihen. Die Wahl geeigneter Additive hängt daher jeweils von der vorgesehenen Verwendung der Zusammensetzung ab. Vorliegend beträgt der Anteil der Additive vorzugsweise 0,1-10 Gew.-%, weiterhin vorzugsweise 0,5-7 Gew.-% und besonders bevorzugt 1-5 Gew.-% bezogen auf das Trockengesamtgewicht der Ausgangsstoffe.

Bevorzugt ist wenigstens ein alkali-empfindliches Additiv enthalten, insbesondere ein Redispersionspulver, ein Redispergiermittel, ein Hydrophobierungsmittel, ein Flammschutzmittel, ein Biozid und/oder ein Farbpigment. Da derartige Additive dazu neigen, in einem hochalkalischen Milieu zu zerfallen, sich zu zersetzen, zu verseifen oder deaktiviert zu werden, kommen die Vorteile der Erfindung hier besonders gut zum Tragen. Denn der reduzierte pH-Wert der erfindungsgemäßen Zusammensetzung stellt sicher, dass die Wirksamkeit der Additive über einen möglichst langen Zeitraum erhalten bleibt. Sofern das Additiv der aus der Zusammensetzung hergestellten Beschichtung eine besondere Eigenschaft verleiht, ist ferner sichergestellt, dass die Beschichtung diese Eigenschaft für einen langen Zeitraum behält. Dies erweist sich insbesondere bei alkali-empfindlichen Additiven, wie beispielsweise Hydrophobierungsmitteln oder Bioziden als Vorteil. Denn dadurch ist ein möglichst langer Schutz der Beschichtung vor mikrobiellem Befall oder Bewuchs gewährleistet, was sich insbesondere bei frei bewitterten Beschichtungen, wie Putze für den Außenbereich, als vorteilhaft erweist.

Sofern ein Biozid als Additiv enthalten ist, wird vorgeschlagen, dass dieses ein Fungizid und/oder Algizid ist. Fungizide wirken gegen Pilzbefall, während Algizide das Algenwachstum verhindern sollen. Es können auch Wirkstoffkombinationen zum Einsatz gelangen, um den Befall bzw. Bewuchs mit Mikroorganismen zu verhindern oder zumindest zu hemmen.

Da Biozide sich in einem alkalischen Milieu als besonders instabil erweisen, wird alternativ oder ergänzend vorgeschlagen, dass das Biozid in verkapselter Form enthalten ist. Die Zugabe in verkapselter Form bewirkt einen zusätzlichen Schutz des Wirkstoffs. Zudem verzögert die Verkapselung die Abgabe des Wirkstoffs, so dass die antimikrobielle Wirkung über einen möglichst langen Zeitraum erhalten bleibt.

Die Verkapselung stellt ein seit langem bekanntes Verfahren zur Formulierung von Wirkstoffen dar. Hierbei wird ein Trägermaterial mit wenigstens einem Wirkstoff angereichert und von einem Hüllmaterial umschlossen, das die verzögerte Freisetzung des Wirkstoffs bewirkt. Nicht miteinander verträgliche Wirkstoffe können getrennt verkapselt werden, so dass sie dennoch in Kombination einsetzbar sind. Als Trägermaterial dienen in der Regel wenige Mikrometer große Teilchen, so dass häufig auch von Mikrokapseln die Rede ist. Derartige Mikrokapseln sowie ein Verfahren zu deren Herstellung werden beispielsweise in der DE 28 05 106 A1 beschrieben.

Vorteilhafterweise enthält die Zusammensetzung wenigstens einen Verzögerer und/oder Beschleuniger, da sich hierüber das Abbindeverhalten einer aus einer erfindungsgemäßen Beschichtung hergestellten Beschichtung positiv beeinflussen lässt. Beispielsweise kann das Verzögerer/Beschleuniger-Verhältnis derart gewählt werden, dass die Beschichtung schnell aushärtet. Dies ist insbesondere bei Anwendung der Zusammensetzung in der kalten Jahreszeit und widrigen Witterungsbedingungen von Vorteil. Begünstigend wirkt sich dabei der in der erfindungsgemäßen Zusammensetzung enthaltene Tonerdezement aus, dessen Aushärtung sich durch die Zugabe entsprechender Additive besonders gut beschleunigen lässt. Als Verzögerer können beispielsweise Weinsäure, Zitronensäure, phosphorige Säure, Phosphorsäure, Phosphonsäure und/oder deren Derivate zugegeben werden, während sich als Beschleuniger vor allem Lithiumsalze eignen.

Als Sulfat bzw. Sulfatträger können Alkali- und/oder Erdalkalisulfate, vorzugsweise Calciumsulfate, enthalten sein. Besonders bevorzugt enthält die Zusammensetzung Anhydrit als Sulfatträger.

Des Weiteren bevorzugt sind in der erfindungsgemäßen Zusammensetzung organische und/oder anorganische Füllstoffe, insbesondere carbonatische und silikatische Füllstoffe, wie beispielsweise Kalksteinmehle und Quarzsande, enthalten. Der Anteil der Füllstoffe beträgt vorzugsweise 30-90 Gew.-%, weiterhin vorzugsweise 50-85 Gew.-% und besonders bevorzugt 60-80 Gew.-% bezogen auf das Trockengesamtgewicht der Ausgangsstoffe.

Zur Erhöhung der Lagerstabilität einer zementhaltigen Trockenzusammensetzung zur Ausbildung einer Beschichtung, insbesondere einer Putzschicht oder Bodenbeschichtung, auf einer Gebäudewand oder -decke, umfassend wenigstens ein Additiv wird ferner ein Verfahren vorgeschlagen, das sich dadurch auszeichnet, dass der pH-Wert der Zusammensetzung reduziert wird. Vorzugsweise wird der pH-Wert auf einen Wert < 12, weiterhin vorzugsweise auf einen Wert < 11, insbesondere auf einen Wert < 10 eingestellt. Gegenüber einer herkömmlichen zementhaltigen Trockenzusammensetzung, deren pH-Wert üblicherweise deutlich über 12 liegt, wird der pH-Wert demnach abgesenkt. Die Absenkung des pH-Wertes hat zur Folge, dass in der Zusammensetzung enthaltene Additive, insbesondere solche, die alkali-empfindlich sind, nicht verseifen, nicht zerfallen und somit möglichst lange aktiv bleiben. Dies hat ferner eine erhöhte Lagerstabilität der zementhaltigen Trockenzusammensetzung zur Folge. Der reduzierte pH-Wert ermöglicht ferner den Einsatz einer großen Bandbreite an Additiven unabhängig von ihrer jeweiligen Alkali-Empfindlichkeit.

Des Weiteren wird vorgeschlagen, dass zur Reduzierung des pH-Wertes eine Bindemittelmischung umfassend Portlandzement und Tonerdezement verwendet wird und der Bindemittelmischung wenigstens ein Sulfat oder Sulfatträger zugegeben wird. Auf diese Weise erhält man eine erfindungsgemäße zementhaltige Trockenzusammensetzung wie vorstehend bereits beschrieben. Hinsichtlich der Vorteile einer solchen Zusammensetzung kann daher auf die bereits vorstehend genannten Vorteile verwiesen werden.

Bevorzugt werden - jeweils bezogen auf das Trockengesamtgewicht der Ausgangsstoffe - 1-30 Gew.-% Portlandzement, 1-35 Gew.-% Tonerdezement als Bindemittel verwendet und der Bindemittelmischung 0,5-15 Gew.-% wenigstens eines Sulfats oder Sulfatträgers (gerechnet als SO₄²⁻) zugegeben. Das Verhältnis der drei Komponenten Tonerdezement, Portlandzement und Sulfat bzw. Sulfatträger zueinander beträgt vorzugsweise 10:2:1 bis 10:50:20.

Als Sulfat bzw. Sulfatträger können Alkali- und/oder Erdalkalisulfate, vorzugsweise Calciumsulfate, zugegeben werden. Besonders bevorzugt wird Anhydrit als Sulfatträger zugegeben.

Die im Übrigen für die erfindungsgemäße Zusammensetzung genannten bevorzugten Merkmale, können ebenfalls bevorzugte Merkmale des erfindungsgemäßen Verfahrens darstellen. So kann bzw. können ein Redispersionspulver, ein Redispergiermittel, ein Hydrophobierungsmittel, ein Flammschutzmittel, ein Wasserrückhaltemittel, ein Verzögerer, ein Beschleuniger, ein Netzmittel, ein Luftporenbildner, ein Fließmittel, ein Entschäumer, ein Entstaubungsmittel, ein Biozid, ein Pigment, Fasern und/oder ein rheologisches Additiv als Additiv bzw. Additive zugegeben werden. Vorzugsweise werden 0,1-10 Gew.-%, weiterhin vorzugsweise 0,5-7 Gew.-% und besonders bevorzugt 1-5 Gew.-% Additive bezogen auf das Trockengesamtgewicht der Ausgangsstoffe zugegeben.

Insbesondere ist die Zugabe wenigstens eines alkali-empfindlichen Additivs möglich. Dies kann bzw. können vor allem ein Redispersionspulver, ein Redispergiermittel, ein Hydrophobierungsmittel, ein Flammschutzmittel, ein Biozid und/oder ein Farbpigment sein. Das zugegebene Biozid kann ein Fungizid und/oder ein Algizid sein. Ferner kann das Biozid in verkapselter Form zugegeben werden.

Vorteilhafterweise werden wenigstens ein Verzögerer und/oder Beschleuniger, zugegeben, mittels welcher das Abbindeverhalten der Zusammensetzung insbesondere in der Weise beeinflussbar ist, dass die hieraus hergestellte Beschichtung schnell aushärtet. Dies ist insbesondere bei Anwendung der Zusammensetzung in der kalten Jahreszeit und widrigen Witterungsbedingungen von Vorteil. Als Verzögerer werden vorzugsweise Weinsäure, Zitronensäure, phosphorige Säure, Phosphorsäure, Phosphonsäure und/oder deren Derivate und als Beschleuniger Lithiumsalze eingesetzt.

Ferner können der Zusammensetzung organische und/oder anorganische Füllstoffe, insbesondere carbonatische und silikatische Füllstoffe, wie beispielsweise Kalksteinmehle und Quarzsande, zugegeben werden. Vorzugsweise werden 30-90 Gew.-%, weiterhin vorzugsweise 50-85 Gew.-% und besonders bevorzugt 60-80 Gew.-% organische und/oder anorganische Füllstoffe bezogen auf das Trockengesamtgewicht der Ausgangsstoffe zugegeben.

Die Vorteile der Erfindung werden nachfolgend anhand der beispielhaft angeführten Zusammensetzungen verdeutlicht.

### Beispiel 1

### "Unterputz"

| | |
|---|---|
| 5 Gew.-% | Tonerdezement |
| 12 Gew.-% | Portlandzement |
| 2 Gew.-% | Anhydrit |
| 75 Gew.-% | Füllstoffe |
| 6 Gew.-% | Additive, insbesondere Redispersionspulver, Hydrophobierungsmittel, Netzmittel, Verdicker, Biozide, Verzögerer und Beschleuniger |

Nach Zugabe von Anmachwasser wurde die Zusammensetzung auf einer Wärmedämmplatte appliziert und getrocknet. Der pH-Wert bei Applikation betrug 10,7, nach einem Tag 10,0 und nach sechs Tagen ebenfalls 10. Wobei nach zehn Tagen nur noch ein pH-Wert von 9 gemessen wurde.

Zur Messung des pH-Wertes wurde die auf die Wärmedämmplatte applizierte und getrocknete Beschichtung jeweils mit Wasser angefeuchtet.

### Beispiel 2

### "Oberputz"

| | |
|---|---|
| 10 Gew.-% | Tonerdezement |
| 4 Gew.-% | Portlandzement |
| 2 Gew.-% | Gips (CaSO₄) |
| 80 Gew.-% | Füllstoffe |
| 4 Gew.-% | Additive, insbesondere Redispersionspulver, Hydrophobierungsmittel, Netzmittel, Verdicker, Biozide, Verzögerer und Beschleuniger |

Nach Zugabe von Anmachwasser wurde die Zusammensetzung auf einer Wärmedämmplatte appliziert und getrocknet. Der pH-Wert bei Applikation und nach einem Tag betrug 10,5 und nach sechs Tagen 9,5.

### Vergleichsbeispiel

### "Unterputz"

| | |
|---|---|
| 18 Gew.-% | Portlandzement |
| 2 Gew.-% | Weißkalkhydrat |
| 77 Gew.-% | Füllstoffe |
| 3 Gew.-% | Additive |

Bei dem Vergleichsbeispiel handelt es sich um eine herkömmliche zementhaltige Zusammensetzung zur Ausbildung eines Unterputzes. Auch diese wurde mit Wasser angemacht und auf eine Wärmedämmplatte appliziert und getrocknet. Bei Applikation betrug der pH-Wert 12,5 und blieb auch nach zehn Tagen unverändert.

Ein Vergleich der pH-Werte mit denen des Beispiels 1 zeigt, dass die Werte der erfindungsgemäßen Zusammensetzung zur Ausbildung eines Unterputzes deutlich unter denen der herkömmlichen Zusammensetzung liegen. Dies gilt insbesondere nach einer Zeit von zehn Tagen.

### Vergleichsbeispiel

### "Oberputz"

| | |
|---|---|
| 14 Gew.-% | Portlandzement |
| 9 Gew.-% | Weißkalkhydrat |
| 75 Gew.-% | Füllstoffe |
| 2 Gew.-% | Additive |

Bei dem zweiten Vergleichsbeispiel handelt es sich um eine herkömmliche zementhaltige Zusammensetzung zur Ausbildung eines Oberputzes. Auch diese wurde mit Wasser angemacht und auf eine Wärmedämmplatte appliziert und getrocknet. Bei Applikation sowie nach sechs Tagen betrug der pH-Wert 13,0.

Ein Vergleich der pH-Werte mit denen des Beispiels 2 zeigt, dass der pH-Wert der erfindungsgemäßen Zusammensetzung zur Ausbildung eines Oberputzes, insbesondere nach sechs Tagen, deutlich unter dem pH-Wert der herkömmlichen Zusammensetzung liegt.

## Patentansprüche

1. Zementhaltige Trockenzusammensetzung zur Ausbildung einer Beschichtung, insbesondere einer Putzschicht oder einer Bodenbeschichtung, auf einer Gebäudewand oder -decke, wobei die Zusammensetzung wenigstens ein Additiv umfasst,
**dadurch gekennzeichnet, dass** die Zusammensetzung Portlandzement und Tonerdezement als Bindemittel sowie wenigstens ein Sulfat oder einen Sulfatträger umfasst und der pH-Wert der Zusammensetzung < 12, vorzugsweise < 11, weiterhin vorzugsweise < 10 beträgt.

2. Zusammensetzung nach Anspruch 1,
**dadurch gekennzeichnet, dass** bezogen auf das Trockengesamtgewicht der Ausgangsstoffe 1-30 Gew.-% Portlandzement, 1-35 Gew.-% Tonerdezement und 0,5-15 Gew.-% wenigstens eines Sulfats oder Sulfatträgers, gerechnet als SO₄²⁻, enthalten sind.

3. Zusammensetzung nach Anspruch 1 oder 2,
**dadurch gekennzeichnet, dass** das Additiv ein Redispersionspulver, ein Redispergiermittel, ein Hydrophobierungsmittel, ein Flammschutzmittel, ein Wasserrückhaltemittel, ein Verzögerer, ein Beschleuniger, ein Netzmittel, ein Luftporenbildner, ein Fließmittel, ein Entschäumer, ein Entstaubungsmittel, ein Biozid, ein Pigment, Fasern und/oder ein rheologisches Additiv ist, wobei der Anteil der Additive vorzugsweise 0,1-10 Gew.-%, weiterhin vorzugsweise 0,5-7 Gew.-% und besonders bevorzugt 1-5 Gew.-% bezogen auf das Trockengesamtgewicht der Ausgangsstoffe beträgt.

4. Zusammensetzung nach einem der vorhergehenden Ansprüche,
**dadurch gekennzeichnet, dass** das Additiv alkali-empfindlich ist und vorzugsweise ein Redispersionspulver, ein Redispergiermittel, ein Hydrophobierungsmittel, ein Flammschutzmittel, ein Biozid und/oder ein Pigment ist.

5. Zusammensetzung nach Anspruch 4,
**dadurch gekennzeichnet, dass** das Biozid ein Fungizid und/oder Algizid ist und/oder das Biozid in verkapselter Form enthalten ist.

6. Zusammensetzung nach Anspruch 4 oder 5,
**dadurch gekennzeichnet, dass** Weinsäure, Zitronensäure, phosphorige Säure, Phosphorsäure, Phosphonsäure und/oder deren Derivate als Verzögerer und/oder Lithiumsalze als Beschleuniger enthalten ist bzw. sind.

7. Zusammensetzung nach einem der vorhergehenden Ansprüche,
**dadurch gekennzeichnet, dass** Alkali- und/oder Erdalkalisulfate, vorzugsweise Calciumsulfate, weiterhin vorzugsweise Anhydrit, als Sulfat oder Sulfatträger enthalten sind bzw. ist.

8. Zusammensetzung nach einem der vorhergehenden Ansprüche,
**dadurch gekennzeichnet, dass** organische und/oder anorganische Füllstoffe, insbesondere carbonatische und silikatische Füllstoffe, wie beispielsweise Kalksteinmehle und Quarzsande, enthalten sind, wobei vorzugsweise der Anteil der Füllstoffe 30-90 Gew.-%, weiterhin vorzugsweise 50-85 Gew.-% und besonders bevorzugt 60-80 Gew.-% bezogen auf das Trockengesamtgewicht der Ausgangsstoffe beträgt.

9. Verfahren zur Erhöhung der Lagerstabilität einer zementhaltigen Trockenzusammensetzung zur Ausbildung einer Beschichtung, insbesondere einer Putzschicht oder einer Bodenbeschichtung, auf einer Gebäudewand oder -decke, wobei die Zusammensetzung wenigstens ein Additiv umfasst,
**dadurch gekennzeichnet, dass** der pH-Wert der Zusammensetzung reduziert wird, wobei er vorzugsweise auf einen Wert < 12, weiterhin vorzugsweise auf einen Wert < 11, insbesondere auf einen Wert < 10 eingestellt wird.

10. Verfahren nach Anspruch 9,
**dadurch gekennzeichnet, dass** zur Reduzierung des pH-Wertes eine Bindemittelmischung umfassend Portlandzement und Tonerdezement verwendet wird und der Bindemittelmischung wenigstens ein Sulfat oder Sulfatträger zugegeben wird.

11. Verfahren nach Anspruch 9 oder 10,
**dadurch gekennzeichnet, dass** bezogen auf das Trockengesamtgewicht der Ausgangsstoffe 1-30 Gew.-% Portlandzement, 1-35 Gew.-% Tonerdezement als Bindemittel verwendet werden und der Bindemittelmischung 0,5-15 Gew.-% wenigstens eines Sulfats oder Sulfatträgers, gerechnet als SO₄²⁻, zugegeben werden.

12. Verfahren nach einem der Ansprüche 9 bis 11,
**dadurch gekennzeichnet, dass** Alkali- und/oder Erdalkalisulfate, vorzugsweise Calciumsulfate, weiterhin vorzugsweise Anhydrit, als Sulfat oder Sulfatträger zugegeben werden bzw. wird.

13. Verfahren nach einem der Ansprüche 9 bis 12,
**dadurch gekennzeichnet, dass** ein Redispersionspulver, ein Redispergiermittel, ein Hydrophobierungsmittel, ein Flammschutzmittel, ein Wasserrückhaltemittel, ein Verzögerer, ein Beschleuniger, ein Netzmittel, ein Luftporenbildner, ein Fließmittel, ein Entschäumer, ein Entstaubungsmittel, ein Biozid, ein Pigment, Fasern und/oder ein rheologisches Additiv als Additiv zugegeben wird bzw. werden, wobei vorzugsweise 0,1-10 Gew.-%, weiterhin vorzugsweise 0,5-7 Gew.-% und besonders bevorzugt 1-5 Gew.-% Additive bezogen auf das Trockengesamtgewicht der Ausgangsstoffe zugegeben werden.

14. Verfahren nach einem der Ansprüche 9 bis 13,
**dadurch gekennzeichnet, dass** wenigstens ein alkali-empfindliches Additiv, vorzugsweise ein Redispersionspulver, ein Redispergiermittel, ein Hydrophobierungsmittel, ein Flammschutzmittel, ein Biozid und/oder ein Pigment zugegeben wird bzw. werden.
